Europäisches Patentamt

European Patent Office

Office européen des brevets

(11) Numéro de publication: **0 018 880**

A1

## (12) DEMANDE DE BREVET EUROPEEN

(21) Numéro de dépôt: 80400506.4

(22) Date de dépôt: 16.04.80

(51) Int. Cl.³: **F 16 K 5/06**

(30) Priorité: 25.04.79 FR 7910484

(43) Date de publication de la demande:
12.11.80 Bulletin 80/23

(84) Etats Contractants Désignés:
AT BE CH DE GB IT LI LU NL SE

(71) Demandeur: Gachot, Jean
26 bis, avenue de Paris
F-95230 Soisy sous Montmorency(FR)

(72) Inventeur: Gachot, Jean
26 bis, avenue de Paris
F-95230 Soisy sous Montmorency(FR)

(74) Mandataire: Bouju, André
38 Avenue de la Grande Armée
F-75017 Paris(FR)

(54) Siège pour robinet à boule et robinet muni d'un tel siège.

(57) Siège annulaire pour robinet à boule, destiné à être monté dans le corps du robinet entre une des brides 9 ou le corps et la boule.

Le siège 7 présente une portée sphériques concave 8 pour recevoir la boule, et il est réalisé en un matériau à faible coefficient de frottement. Il comporte un jonc élastique 14 sensiblement torique encastré dans une gorge annulaire 13 pratiquée dans la portée et faisant au repos saillie relativement à cette dernière.

Application aux robinets à boule destinés à assurer un sectionnement étanche, notamment sur les gaz.

FIG. 2

EP 0 018 880 A1

1

La présente invention concerne un siège pour robinet à boule, destiné à coopérer de façon étanche avec un boisseau sphérique, ou boule, monté rotativement dans le corps du robinet.

Elle concerne également, à titre d'application, un robinet à boule muni d'un tel siège.

On sait que, dans un tel robinet, il existe en général deux sièges situés dans des plans approximativement perpendiculaires au sens d'écoulement du fluide et parallèles à l'axe de rotation de la boule. La boule est percée d'un canal qui peut, suivant l'orientation de cette boule, mettre ou non en communication les deux orifices du robinet.

Les sièges sont appliqués sur la boule avec une force prédéterminée pour assurer l'étanchéité entre les deux faces du plan dans lequel est approximativement situé le siège, la coopération entre le siège et la boule s'effectuant suivant une zone sphérique commune correspondant à une portée du siège sur laquelle glisse la boule quand on la manoeuvre. Cette manoeuvre nécessite, à côté des qualités d'étanchéité, des qualités de glissement pour être facilement praticable sans donner lieu à des coincements ou à des grippages.

Il est connu de réaliser des sièges en certaines matières organiques à faible coefficient de frottement, telles que le polytétrafluoréthylène. Outre ses qualités de glissement, cette matière présente une bonne tenue dans une large bande de température. Par contre, s'agissant d'un matériau relativement dur, l'étanchéité au contact de la sphère n'est pas toujours excellente.

On pourrait réaliser des sièges en un matériau élastique, du genre caoutchouc, offrant une certaine possibilité d'écrasement sous pression, et présentant des qualités d'étanchéité remarquables. Mais, inversement, ce genre de matériau est caractérisé par un très fort

coefficient de frottement qui entrave la manoeuvre de la boule et peut conduire, en cas de manoeuvre forcée, à la détérioration du siège.

La présente invention vise à réaliser un siège qui présente à la fois d'excellentes qualités d'étanchéité et qui, par un faible coefficient de frottement, permette une manoeuvre facile de la boule.

Le siège annulaire pour robinet à boule, destiné à être monté dans le corps du robinet entre une des brides ou le corps et la boule, présentant une portée sphérique concave pour recevoir la boule, et réalisé en un matériau à faible coefficient de frottement tel qu'une résine fluorée, est caractérisé en ce qu'il comprend un jonc sensiblement torique en matière élastique partiellement encastré dans une gorge annulaire pratiquée dans ladite portée sphérique, ce jonc faisant au repos saillie relativement à cette dernière.

En position de fonctionnement, le jonc est écrasé par la boule, ce qui procure une excellente étanchéité le long de la boule, alors que l'essentiel de la porté mécanique s'effectue entre la boule et le siège en résine fluorée, par exemple en polytétrafluoréthylène, ce qui assure une résistance minimale au frottement.

Suivant une réalisation avantageuse de l'invention, la section de la gorge par un plan passant par l'axe du robinet présente des angles vifs.

Cette disposition améliore l'étanchéité en évitant les amorces de fuite que pourraient constituer des bords arrondis.

De préférence, la largeur de la gorge est plus grande au fond de cette gorge qu'à la surface de la portée.

Cette disposition présente un double avantage : d'une part, elle contribue à mieux emprisonner le jonc dans sa gorge et à éviter, notamment, qu'il ne soit arraché par les mouvements de la boule ; d'autre part, le bord de la gorge s'appuyant sur la boule constitue un angle aigu de matière et forme lèvre, cette lèvre s'appuyant sur la boule sous l'effet de la pression du fluide contrôlé, ce qui renforce l'étanchéité.

Suivant une réalisation préférée de l'invention, le jonc torique encastré dans la portée fait, au repos, par rapport à cette portée, une saillie comprise entre 0,1 et 0,2 millimètre de hauteur.

On a constaté qu'une dimension de cet ordre donnait, après écrasement, les meilleures conditions de tenue et d'étanchéité.

Suivant une réalisation avantageuse de l'invention, le siège comprend sur sa surface périphérique, un jonc torique en matériau élastique partiellement encastré dans une gorge pour coopérer avec le corps de robinet dans lequel le siège est logé.

De la même manière, le siège comprend avantageusement, sur sa face opposée à la portée, un jonc torique en matériau élastique partiellement encastré dans une gorge pour coopérer avec une pièce maintenant le siège appliqué sur la boule.

D'autres particularités et avantages de l'invention ressortiront encore de la description détaillée qui va suivre.

Aux dessins annexés, donnés à titre d'exemple non limitatif :

    - la Figure 1 est une vue en coupe d'un robinet à boule muni d'un siège conforme à l'invention,

    - la Figure 2 est une vue partielle agrandie de la Figure 1, montrant le détail du siège,

    - la Figure 3 est une vue à grande échelle, montrant l'encastrement du jonc dans sa gorge en position de repos,

    - la Figure 4 est une vue analogue à la Figure 3, mais avec la boule en appui sur le jonc,

4

- la Figure 5 est une vue en coupe d'une réalisation particulière de l'invention.

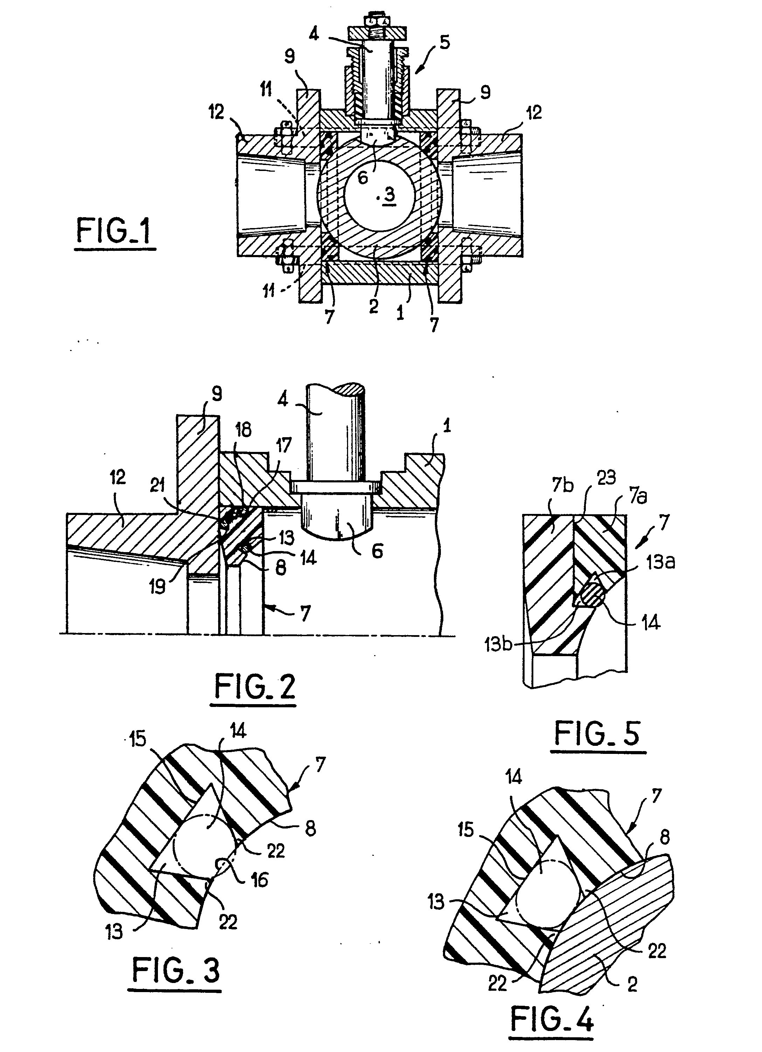

En référence aux Figures 1 et 2, un robinet à boule comporte un corps 1 sensiblement cylindrique dans lequel est montée une boule rotative 2 percée d'un canal 3. Sur la Figure 1, la boule est représentée en position fermée. Une tige 4 traversant un presse-étoupe 5 permet d'actionner la boule en rotation grâce à un raccord "tournevis" 6.

Deux sièges 7 présentant une portée sphérique en creux 8 sont appliqués sur la boule par des brides 9 serrées par des tirants 11 et munies de manchettes de raccordement 12.

Pour plus de clarté, certains des éléments décrits ci-dessus n'ont pas été indiqués sur la Figure 2.

Chacun des sièges 7, qui, dans l'exemple décrit, sont en polytétrafluoréthylène, présente, le long de sa portée sphérique 8, une gorge circulaire 13 (Figures 3 et 4) dans laquelle est inséré un jonc annulaire 14 en matériau élastique tel qu'un élastomère.

Le fond 15 de la gorge 13 est plus large que l'ouverture 16 de la gorge sur la portée 8. Plus précisément, dans l'exemple décrit, la largeur du fond est de 1,8 millimètre, alors que la largeur de l'ouverture est de 1,5 millimètre. La profondeur de la gorge est de 1 millimètre.

Dans ces conditions, et compte tenu d'une certaine déformation du jonc due à l'encastrement, ce dernier, dont le diamètre au repos est de 1,8 millimètre, fait une saillie de 0,1 à 0,2 millimètre par rapport à la portée 8 quand ce jonc est au repos, c'est-à-dire quand la boule 2 n'est pas en place (Figure 3). Quand la boule 2 est mise en place (Figure 4) le jonc est comprimé par la boule, la saillie s'efface et est ramenée au niveau de la portée 8.

Une gorge 17 analogue à la gorge 13 est pratiquée sur la périphérie du siège 7 (Figure 2) pour recevoir un jonc 18 analogue au jonc 14. Le diamètre extérieur du siège 7 étant ajusté au diamètre intérieur du corps 1, le jonc 18 se trouve écrasé lors de l'insertion du siège dans le corps et forme ainsi joint d'étanchéité sur la périphérie du siège.

Enfin, une gorge circulaire 19, toujours sensiblement analogue, est pratiquée sur la face extérieure du siège 7 en contact avec la bride 9 et munie d'un jonc 21 qui se trouve écrasé par la bride lorsqu'on la serre au moyen des tirants 11.

En fonctionnement, la boule 2 porte principalement sur la portée 8 du siège 7. Du fait que ce siège est en polytétrafluoréthylène, la manoeuvre de la boule s'effectue facilement, avec un coefficient de frottement très réduit. Le frottement de la boule sur le jonc 14 implique un coefficient de frottement nettement plus élevé mais, en raison des petites dimensions de ce jonc, l'effort de manoeuvre qui en résulte est négligeable.

En revanche, la présence du jonc élastique 14 apporte une contribution importante à l'étanchéité à la fermeture ; cette étanchéité est due principalement au jonc, mais également à la disposition des faces latérales de la gorge 13. En effet, en raison de la section sensiblement trapèzoïdale de la gorge 13 décrite plus haut, ces faces latérales font un angle aigu avec la portée 8 et constituent ainsi deux lèvres minces 22 qui viennent s'appliquer sur la boule, notamment sous la pression du jonc comprimé. Ainsi, à l'étanchéité procurée par le jonc s'ajoute une étanchéité améliorée de la partie en polytétrafluoréthylène du siège.

En outre, cette étanchéité due aux lèvres 22 subsiste même si le jonc 14 vient à être détruit accidentellement. En effet, le fluide sous pression peut bien s'introduire dans la gorge 14 en passant sous l'une des lèvres, mais il applique alors fortement l'autre lèvre sur la boule, à la manière d'un joint à lèvre classique.

La qualité de l'étanchéité obtenue sur la périphérie du siège et sur sa face extérieure bénéficie des mêmes avantages que celle obtenue sur la portée 8, sauf bien entendu l'avantage lié à la facilité de manoeuvre, qui n'intervient pas ici.

L'étanchéité totale du robinet est alors obtenue, au sectionnement par le jonc 14, à la périphérie par le jonc 18 et radialement par le jonc 21.

Suivant une réalisation avantageuse de l'invention, le siège 7 est réalisé en deux parties 7a, 7b (Figure 5) assemblées suivant un plan de joint 23 sensiblement perpendiculaire à l'axe de la conduite. Chacune de ces parties présente une rainure, respectivement 13a, 13b qui, après assemblage, se situent vis-à-vis l'une de l'autre pour constituer une gorge 13.

Pour monter le siège, on met en place le jonc 14 dans la rainure 13a, puis on réalise l'assemblage. Le jonc est alors emprisonné dans la gorge et les deux parties 13a, 13b sont maintenues assemblées par la pression exercée par les brides 9.

Cette disposition rend l'insertion du jonc plus facile tout en permettant de rendre plus convergentes les parois de manière à mieux retenir le jonc et à prévenir son arrachement.

Bien entendu, ce type de réalisation peut se combiner avec les deux autres joncs décrits plus haut.

L'invention ne se limite pas aux exemples décrits, mais couvre également toute réalisation mettant en oeuvre des moyens équivalents.

7

REVENDICATIONS

1. Siège annulaire pour robinet à boule, destiné à être monté dans le corps du robinet entre une des brides ou le corps et la boule, présentant une portée sphérique concave pour recevoir la boule, et réalisé en un matériau à faible coefficient de frottement tel qu'une résine fluorée, caractérisé en ce qu'il comprend un jonc sensiblement torique en matière élastique partiellement encastré dans une gorge annulaire pratiquée dans ladite portée sphérique, ce jonc faisant au repos saillie relativement à cette dernière.

2. Siège conforme à la revendication 1, caractérisé en ce que la section de la gorge par un plan passant par l'axe du robinet présente des angles vifs.

3. Siège conforme à l'une des revendications 1 ou 2, caractérisé en ce que la largeur de la gorge est plus grande au fond de cette gorge qu'à la surface de la portée.

4. Siège conforme à l'une des revendications 1 à 3, caractérisé en ce que le jonc torique encastré dans la portée fait, au repos, par rapport à cette portée, une saillie comprise entre 0,1 et 0,2 millimètre de hauteur.

5. Siège conforme à l'une des revendications 1 à 4, caractérisé en ce qu'il comprend sur sa surface périphérique un jonc torique en matériau élastique partiellement encastré dans une gorge pour coopérer avec le corps du robinet dans lequel le siège est logé.

6. Siège conforme à l'une des revendications 1 à 5, caractérisé en ce qu'il comprend, sur sa face opposée à la portée, un jonc torique en matériau élastique partiellement encastré dans une gorge pour coopérer avec une pièce maintenant le siège appliqué sur la boule.

7. Siège conforme à l'une des revendications 1 à 6, caractérisé en ce qu'il est réalisé en deux parties présentant chacune une rainure, ces deux rainures étant

8

pratiquées de manière telle qu'après assemblage des deux parties, elles se situent l'une vis-à-vis de l'autre pour constituer une gorge d'encastrement pour le jonc.

8. Robinet à boule comprenant un boisseau sphérique, ou boule, monté rotativement dans un corps et coopérant avec au moins un siège présentant une portée sphérique en creux et réalisé en un matériau à faible coefficient de frottement, tel qu'une résine fluorée, caractérisé en ce que le siège comporte un jonc torique en matériau élastique partiellement encastré dans sa portée, ce jonc faisant au repos saillie relativement à cette dernière.

9. Robinet conforme à la revendication 8, caractérisé en ce que le siège comporte en outre un jonc torique en matériau élastique encastré dans sa surface périphérique pour coopérer avec le corps du robinet.

10. Robinet conforme à l'une des revendications 8 ou 9, caractérisé en ce que le siège comprend en outre un jonc torique en matériau élastique encastré dans la face du siège opposée à la portée sphérique pour coopérer avec une pièce maintenant le siège appliqué sur la boule.

FIG.1

FIG.2

FIG.5

FIG.3

FIG.4

| Catégorie | Citation du document avec indication, en cas de besoin, des parties pertinentes | Revendication concernée | CLASSEMENT DE LA DEMANDE (Int. Cl. 3) |
|---|---|---|---|
| | FR - A - 1 343 064 (GROVE VALVE) <br> * Page 3, colonne de droite, avant-dernier paragraphe à page 4, colonne de droite, premier paragraphe; figures 1-4 * <br><br> -- | 1-8, 10 | F 16 K 5/06 |
| | FR - A - 2 142 775 (AUXIM) <br> * Revendications, point 1; figures 1 et 5 * <br><br> -- | 1,6,9, 10 | |
| A | US - A - 3 521 855 (JENSEN) <br> * Résumé; figures * <br><br> -- | | DOMAINES TECHNIQUES RECHERCHES (Int. Cl. 3) <br><br> F 16 K |
| A | DE - A - 2 632 476 (IMI OPELLA) <br> * Revendications, point 1; figure * <br><br> -- | | |
| A | US - A - 3 437 310 (INCH) <br> * Résumé; figure 5 * <br><br> ---- | | |

**DOCUMENTS CONSIDERES COMME PERTINENTS**

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 14-07-1980 | V. REETH |

OEB Form 1503.1 06.78